(19) **Europäisches Patentamt**
**European Patent Office**
**Office européen des brevets**

(11) **EP 4 687 118 A1**

(12) **EUROPEAN PATENT APPLICATION**

(43) Date of publication:
04.02.2026 Bulletin 2026/06

(21) Application number: 25190952.9

(22) Date of filing: 22.07.2025

(51) International Patent Classification (IPC):
*G06V 10/82* (2022.01)

(52) Cooperative Patent Classification (CPC):
G06V 10/82

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.08.2024 US 202418792034

(71) Applicant: Microsoft Technology Licensing, LLC
Redmond, WA 98052-6399 (US)

(72) Inventors:
• **Patro, Badri Narayana**
**Redmond, WA 98052 (US)**
• **Agneeswaran, Vijay Srinivas**
**Redmond, WA, 98052 (US)**

(74) Representative: **Grünecker Patent- und**
**Rechtsanwälte**
**PartG mbB**
**Leopoldstraße 4**
**80802 München (DE)**

(54) **GATED SPECTRAL STATE SPACE MODEL FOR IMAGE ENCODING**

(57) A system may generate embedded subsets by projecting each subset of the subsets into a vector space to generate a corresponding embedded subset. A system may encode the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets. A system may predict a classification for the input dataset using the encoded image.

FIG. 1

**Description**

**Background**

State space models (SSMs) have proven to be useful for processing long sequences, both in natural language processing (NLP) and vision tasks. SSMs have evolved to address complexity and inductive bias issues in transformer models used in computer vision tasks. Mamba is a recently developed SSM that is popular for performing vision tasks. Several adaptations to Mamba have been developed, including VMamba, Vision Mamba, and Simplified Mamba-Based Architecture (SiMBA).

**Summary**

In some aspects, the techniques described herein relate to a method for classifying an input dataset, the input dataset being divisible into subsets of the dataset, the method including: generating embedded subsets by projecting each subset of the subsets into a vector space to generate a corresponding embedded subset; encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and predicting a classification for the input dataset using the encoded image.

In some aspects, the techniques described herein relate to a computing system for classifying an input dataset, the input dataset being divisible into subsets of the dataset, the computing system including: one or more hardware processors; an image embedder processor executable by the one or more hardware processors and configured to generate embedded subsets by projecting each subset of the subsets into a vector space to generate a corresponding embedded subset; an image encoder processor executable by the one or more hardware processors and configured to encode the embedded subsets into an encoded dataset using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and an image classifier processor executable by the one or more hardware processors and configured to predict a classification for the input dataset using the encoded image.

In some aspects, the techniques described herein relate to one or more tangible processor-readable storage media embodied with instructions for executing on one or more processors and circuits of a computing device a process for classifying an input dataset, the input dataset being divisible into subsets of the dataset, the process including: generating embedded subsets by projecting each subset of the subsets into a vector space to generate a corresponding embedded subset; encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and predicting a classification for the input dataset using the encoded image.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

**Brief Descriptions of the Drawings**

FIG. 1 illustrates a computing environment including an example image encoder having a gated spectral state space model (GSSSM) that generates an encoded image from an embedded image, where the encoded image is usable for image classification tasks.

FIG. 2 illustrates an example computing environment including an image embedder for generating an embedded image from an input image.

FIG. 3 illustrates an example flow for an image encoder including a GSSSM for generating an encoded image from an embedded image.

FIG. 4 illustrates an example flow for using a GSSSM including at least one spectral state space model (SSM) in an image encoder.

FIG. 5 illustrates an example flow of a spectral SSM within a GSSSM of an image encoder.

FIG. 6 illustrates example operations for encoding an embedded image using an image encoder including an GSSSM and classifying the encoded image.

FIG. 7 illustrates an example computing device for use in implementing the described technology.

## Detailed Descriptions

Transformer models have shown state-of-the-art performance in various domains such as NLP, computer vision, audio, video, and structural data and form the building block of large language models (LLMs) and computer vision models. However, when presented with long input sequences, transformer models suffer from quadratic computational complexity, an increase in the number of required learning parameters, and increased latency (e.g., training and/or inference time required). Quadratic computational complexity means that as the input sequence increases (e.g., the number of patches of an input image increases as the image resolution increases), the computational complexity increase can be modeled as a quadratic function (e.g., $y(x) = x^2 - 2x + 12$ is an example of a quadratic function), which has a substantially greater increase than a linear function (e.g., $y(x) = x + 2$ is an example of a linear function) as the sequence size increase.

Mamba models have been developed to address the issue of computational complexity and may obtain sub-quadratic (e.g., $y(x) = x^z$, where z is less than 2, and is an example of a sub-quadratic function) computational complexity, which is an improvement over transformer models. However, Mamba frameworks (including Mamba, VMamba, Vision Mamba, and SiMBA) still suffer from the increase in the number of required learning parameters and the increased latency as the length of the input sequence is increased. Mamba frameworks also suffer from instability during training when scaled to large network sizes, resulting in an inability to train in some instances. Further, Mamba frameworks, although they may have advantages over transformer frameworks due to their sub-quadratic computational complexity, such Mamba frameworks often have a performance gap compared to state-of-the-art transformer frameworks.

The technology described herein addresses the deficiencies in conventional transformer frameworks and conventional Mamba frameworks described above and provides one or more of (1) improved performance, (2) improved computational efficiency, (3) reduced instability of training, and (4) reduced number of parameters required for training over the conventional frameworks. The described technology provides a gated spectral state space model (GSSSM) for encoding an image. The GSSSM of the described technology performs spectral transformations of embedded input image patches and, in some implementations, spectral transformations of learning parameters, which are not performed in conventional Mamba architectures. Further, in some implementations, the GSSSM of the described technology eliminates the processing of embedded input image patches by an initial convolutional neural network (CNN) layer prior to the application of an SSM in conventional Mamba architectures. The GSSSM of the described technology also decreases the training latency over conventional Mamba frameworks, while improving performance over conventional Mamba and transformer frameworks, as shown in the following results:

(Table 1)

| Mask R-CNN 1× schedule | | | | | | | | |
|---|---|---|---|---|---|---|---|---|
| Backbone | $AP^b$ | $AP^b_{50}$ | $AP^b_{75}$ | $AP^m$ | $AP^m_{50}$ | $AP^m_{75}$ | #param. | FLOPs |
| ResNet-101 | 38.2 | 58.8 | 41.4 | 34.7 | 55.7 | 37.2 | 63M | 336G |
| Swin-S | 44.8 | 66.6 | 48.9 | 40.9 | 63.2 | 44.2 | 69M | 354G |
| ConvNeXt-S | 45.4 | 67.9 | 50.0 | 41.8 | 65.2 | 45.1 | 70M | 348G |
| PVTv2-B3 | 47.0 | 68.1 | 51.7 | 42.5 | 65.7 | 45.7 | 65M | 397G |
| EffVMamba-T | 35.6 | 57.7 | 38.0 | 33.2 | 54.4 | 35.1 | 11M | 60G |
| PlainMamba-Adpt-L2 | 46.0 | 66.9 | 50.1 | 40.6 | 63.8 | 43.6 | 53M | 542G |
| LocalVMamba-T | 46.7 | 68.7 | 50.8 | 42.2 | 65.7 | 45.5 | 45M | 291G |
| VMamba-T | 47.4 | 69.5 | 52.0 | 42.7 | 66.3 | 46.0 | 50M | 270G |
| Gated Spectral State Space Model (GSSSM) | 47.9 | 69.8 | 52.8 | 43.0 | 66.7 | 46.8 | 52M | 292G |

Table 1 depicts the performances of various vision models on an input dataset (e.g., COCO val2017 dataset) for the downstream tasks of object detection and instance segmentation. RetinaNet is used as the object detector for the object detection task, and the Average Precision (*AP*) at different IoU thresholds or two different object sizes (*i.e.,* small and base) are reported for evaluation. For instance segmentation task, Mask R-CNN is used as the base model, and the bounding box and mask Average Precision (*i.e., $AP^b$ and $AP^m$*) are reported for evaluation. "1 ×" indicates models fine-tuned for 12 epochs. As shown in the able performance results of Table, the GSSSM of the described technology outperforms the other tested networks concerning object detection and segmentation tasks.

In some implementations, the GSSSM of the described technology is trained using a simple parametrized Gaussian function, which approximates the more complex matrix-based computation (e.g., using a state matrix A, an input matrix B, and an output matrix C) used in conventional Mamba frameworks. For example, in some implementations, the GSSSM of the described technology assumes that each learning parameter is a Gaussian function regardless of input sequence length. The use of the parametrized Gaussian function for training, as provided in certain implementations of the described technology, eliminates the increase in training parameters required by conventional Mamba frameworks and transformer frameworks as input sequence length is increased. Accordingly, the training latency of the GSSSM is significantly less than the training latency of conventional Mamba frameworks and transformer frameworks. Further, the use of the Gaussian function also increases the stability during training over conventional Mamba frameworks.

Further, the GSSSM of the described technology provides the above-described improvements to inference latency and training performance without sacrificing the sub-quadratic computational complexity achieved by conventional Mamba frameworks and without resulting in any significant performance gap when compared to state-of-the-art transformer frameworks.

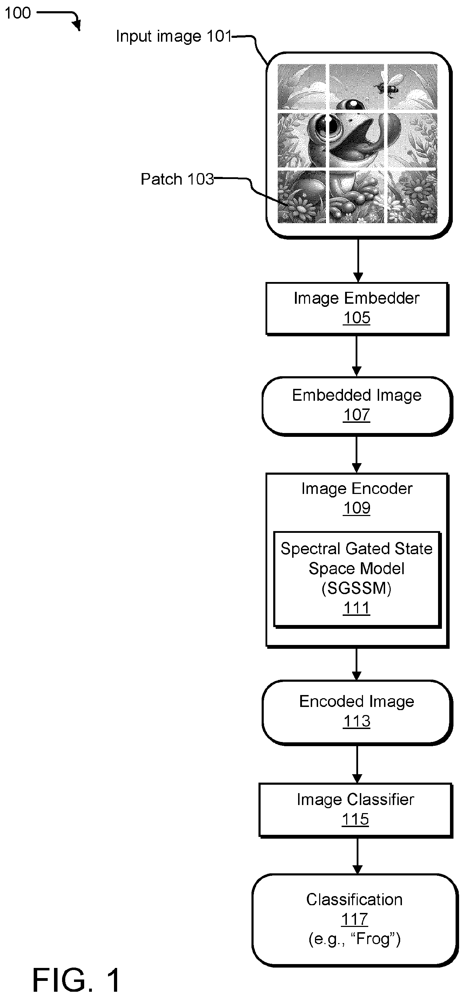

FIG. 1 illustrates a computing environment 100 including an example image encoder 109 having a GSSSM 111 generates an encoded image 113 from an embedded image 107, where the encoded image 113 is usable for image classification tasks. An image embedder 105 generates the embedded image 107 from patches (e.g., patch 103) of the input image 101. For example, the input image 101 (or other input dataset) is divisible into a set of patches. Each patch (e.g., patch 103) of the input dataset is a respective portion of the input dataset. For example, patch 103 is a portion of the input image 101. For example, for an input image 101, each patch is an area of the image of specific (e.g., square) dimensions such as an 8-pixel by 8-pixel area, a 16-pixel by 16-pixel area, a 2-pixel by 2-pixel area, a single-pixel area, or area of other dimensions. The example input image 101 depicted in FIG. 1 has nine patches, however, the input image 101 may be divided into any number of patches. In some implementations, each patch includes a set of pixels including red-green-blue (RGB) color data associated with each pixel. In some implementations, pixels of the input image 101 do not overlap between patches. In other words, patches are exclusive subsets of pixels of the input image in such implementations. However, in other implementations, data may overlap between patches.

The image embedder 105, in some implementations, generates the embedded image 107 by performing a linear projection of each input image 101 patch (e.g., patch 103) to generate an embedded image 107 including a set of embedded image patches. For example, the image embedder 105 generates a respective embedded image patch for each input image 101 patch. However, other methods of generating the embedded image 107 may be used.

The embedded image 107 (e.g., N embedded image patches) is input to an image encoder 109, which generates an encoded image 113 based on the embedded image 107. The image encoder 109 includes a GSSSM 111. The GSSSM 111 is a gated neural network. Gated neural networks incorporate gating mechanisms to control the flow of information. These gating mechanisms allow the GSSSM 111 to regulate the information that passes through the layers of the GSSSM 111, effectively enabling it to learn complex patterns and dependencies in the data. Further, the GSSSM 111 includes a spectral state space model (SSM) for representing features of the input image 101.

The encoded image 113 is input to the image classifier 115 and the image classifier 115 predicts a classification 117 for the input image 101. The classification 117 may be an identity of one or more features of the input image 101 based on the embedded image 107. Features can include features such as tumors and lesions in medical imaging, faces, and corresponding identities in video data, drought and flood conditions in satellite imagery, linguistic tokens in speech audio and text, etc. For example, the image classifier 115 determines, based on the embedded image 107, a "frog" classification 117 for the example input image 101 of FIG. 1. In some implementations, the classification 117 identifies a predominant feature of a set of identified features. For example, the example input image 101 of FIG. 1 depicts a frog eating a fly with a forest background. In this example, identified features in the input image 101 may include the frog, the fly, and the background and the classification 117 of the image is "frog" as the predominant feature of the input image 101.

The image embedder 105, in some implementations, is a dataset embedder and embeds a dataset and the image encoder 109 is a dataset encoder and encodes the dataset using embedded subsets generated by the dataset embedder. For example, the input image of certain implementations described herein is one example of an input data set. However, other types of data may be included in the input dataset in addition to or instead of an input image 101, including other image data (e.g., a captured image or frame of a captured video), weather data, drone data, satellite data, audio data, text data, seismic sensor readings, video data, and other data containing discernable features. The patch 103 is one example of a subset of the input dataset. Accordingly, a subset of the input dataset could include a subset of other image data (e.g., a captured image or frame of a captured video), weather data, drone data, satellite data, audio data, text data, seismic sensor readings, video data, and other data containing discernable features. Subsets may be mutually exclusive to other subsets in some implementations. In some implementations, data may overlap between subsets. The dataset embedder can generate the embedded dataset (e.g., the embedded image 107 is one example of an embedded dataset) by performing one or more operations (e.g., linear projection is one example of an operation) on the subsets of the dataset to generate embedded subsets (e.g., an embedded image patch is one example of an embedded subset). Accordingly, in some implementations, the image encoder 109 is a dataset encoder, which generates an encoded dataset (N encoded subsets) based on the embedded dataset (N embedded subsets). The encoded dataset is usable for dataset classification tasks. Accordingly, in such implementations, the image classifier 115 is a data set classifier and can generate a classification 117 based on the encoded dataset. For example, a feature detected within an input image 101 is one example of a classification 117, however, the classification 117 may be a detected feature (e.g., a band of sensor readings), a detected predominant feature (e.g., an overall pattern of seismic data), or other classification 117 derived from the dataset.

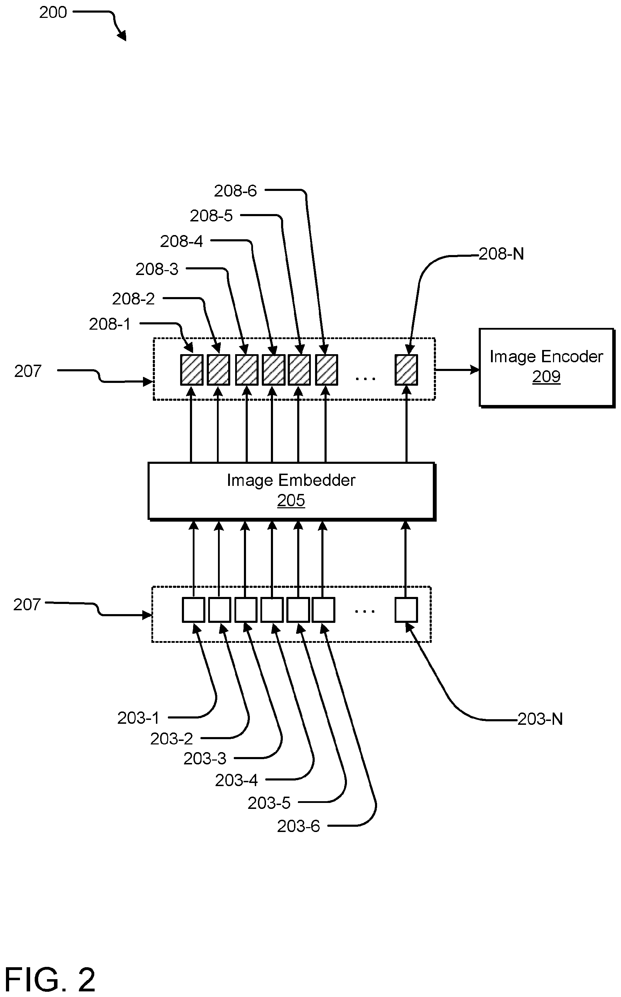

FIG. 2 illustrates an example computing environment 200 including an image embedder 205 for generating an embedded image 207 from an input image 201. The input image 201 may be divided into a set of N input image patches (e.g., input image patch 203-1, input image patch 203-2, input image patch 203-3, input image patch 203-4, input image patch 203-5, input image patch 203-6, ... input image patch 203-N). For example, the input image 201 may be divided into 1000, 400, 48, 24, 16, 9, 8, 4, 2, or other number (N) of input image patches.

The image embedder 205 generates an embedded image 207 from the N input image patches. The embedded image 207 is a set of N embedded image patches (e.g., embedded image patch 208-1, embedded image patch 208-2, embedded image patch 208-3, embedded image patch 208-4, embedded image patch 208-5, embedded image patch 208-6, ... embedded image patch 208-N). Each embedded image patch is a linear projection of a corresponding input image patch and the number of embedded image patches is equal to the number of input image patches. For example, linear projection involves projecting the input image patch into a lower dimensional space to generate an embedding vector. Accordingly, each embedded image patch (e.g., embedded image patch 208-1) is a vector that represents the corresponding input image patch (e.g., input image patch 203-1).

The embedded image 207 (including N embedded image patches) may be input to an image encoder 209, which generates an encoded image based on the embedded image 207. The image encoder 209 includes an GSSSM that is trained to generate an encoded image from an embedded image 207. The encoded image is usable for image classification tasks.

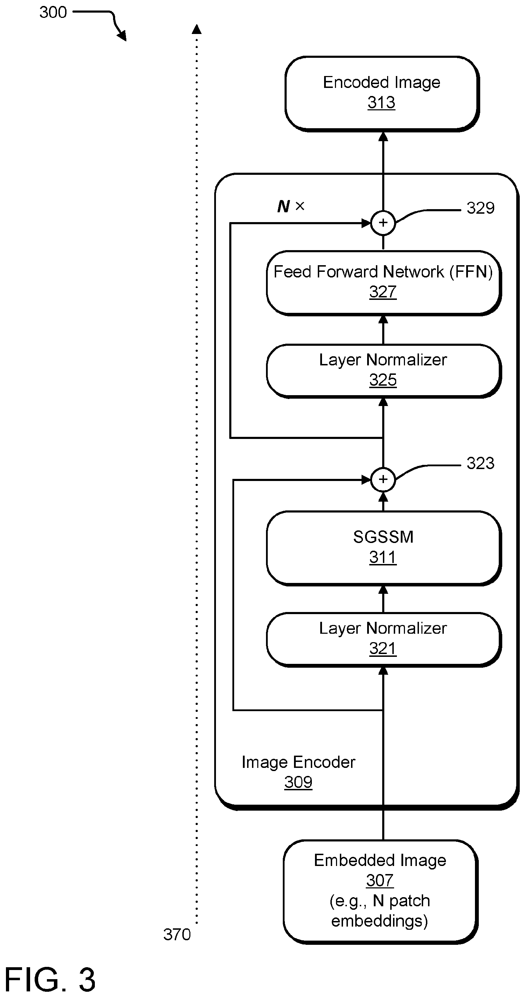

FIG. 3 illustrates an example flow 300 for an image encoder 309 including a GSSSM 311 for generating an encoded image 313 from an embedded image 307. The flow 300 in FIG. 3 progresses from bottom to top, as indicated by the dashed arrow 370.

The embedded image 307 is input to the layer normalizer 321. Layer normalizers normalize all the activations of a single layer from a batch by collecting statistics from every unit within the layer. For example, the layer normalizer 321 normalizes each of the N patch embeddings of the embedded image 307 to generate a respective normalized patch embedding. Accordingly, the layer normalizer 321 generates, from the embedded image 307 including N patch embeddings, a normalized embedded image including N normalized patch embeddings.

The normalized embedded image, including the N normalized patch embeddings, is input to the GSSSM 311. The summer 323 adds (e.g., concatenates or otherwise combines) outputs of the GSSSM 311 with the embedded image 307 that was input to the image encoder 309. The outputs of the GSSSM 311 include N predictions, each of the N predictions corresponding to a respective normalized patch embedding (of the N normalized patch embeddings) to which the GSSSM 311 is applied. Accordingly, each of the N predictions of the GSSSM 311 is added to its respective patch embedding (of the N patch embeddings of the embedded image 307) at the summer 323.

The resulting N outputs of the summer 323 are input to the layer normalizer 325. Layer normalizers normalize all the activations of a single layer from a batch by collecting statistics from every unit within the layer. For example, the layer normalizer 325 normalizes the N outputs of the GSSSM 311 corresponding to each of the N normalized patch embeddings of the normalized embedded image to generate a respective normalized output.

Each of the N normalized outputs of the layer normalizer 325 is input to a feed-forward network (FFN) 327, which generates N predictions. For example, the FFN 327 is a feed-forward artificial neural network consisting of fully connected neurons with an activation function (e.g., a non-linear activation function) organized in multiple layers. The FFN 327 is a neural network in which nodes do not form loops and in which all information is only passed forward. In the FFN 327, during data flow, input nodes receive data, which travel through hidden layers, and exit output nodes, where an output (e.g., a prediction) is generated. The N outputs of the FFN 327 are combined with the N outputs of the summer 323. The encoded image 313 includes the output of the summer 329.

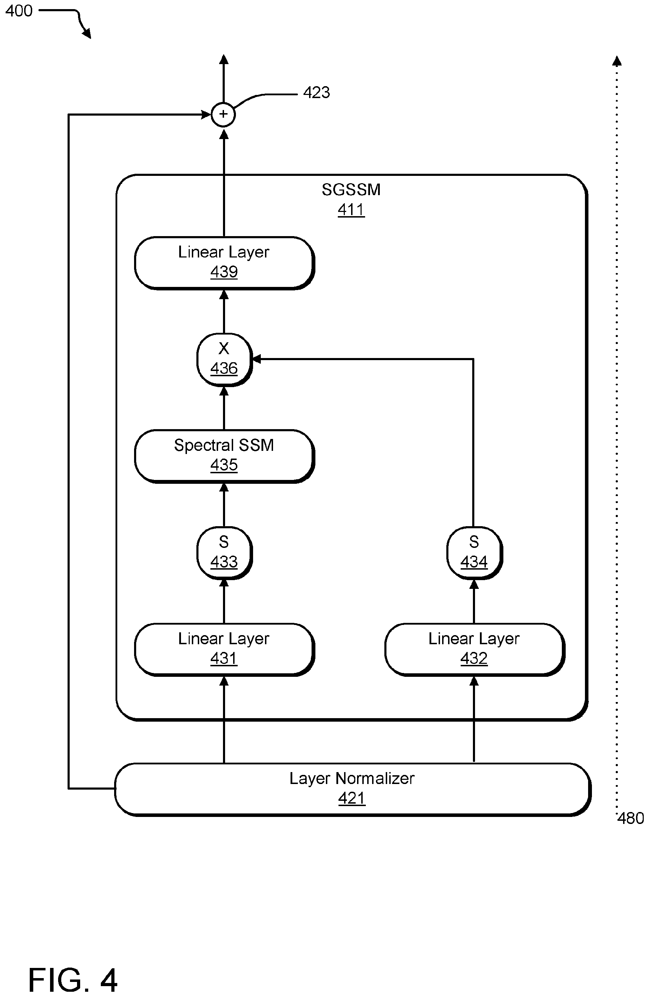

FIG. 4 illustrates an example flow 400 for using a GSSSM 411 including at least one spectral state space model (SSM) 435 in an image encoder. The flow 400 progresses from bottom to top, as indicated by the dashed arrow 480. The GSSSM 411 is a gated neural network that includes a spectral SSM 435. Gated neural networks incorporate gating mechanisms to control the flow of information. These gating mechanisms allow the GSSSM 411 to regulate the information that passes through the layers of the GSSSM 411, effectively enabling it to learn complex patterns and dependencies in the data. In a gated neural network, the gates are typically implemented using sigmoidal functions or other types of activation functions. These values output by the activation functions are used to scale the activation passing through the network, effectively acting as switches that can either block or allow information to pass. Examples of gated neural networks include Long Short-Term Memory (LSTM) networks and Gated Recurrent Unit (GRU) networks.

An SSM is a linear time-invariant system that maps the input stimulation $x(t) \in \mathcal{R}^L$ to a response $y(t)$ through a hidden space $h(t) \in \mathcal{R}^N$. Structured SSMs (e.g., S4 SSMs) are a recent class of sequence models for deep learning. Structured SSMs are broadly related to RNNs, CNNs, and classical state space models. An SSM represents the dynamics of a system using a set of first-order differential equations for describing linear time-invariant (LTI) systems. Mathematically, continuous-time latent state spaces can be modeled as linear ordinary differential equations that use a state matrix $A \in \mathcal{R}^{N \times N}$ and input matrix $B \in \mathcal{R}^{N \times 1}$ and output matrix C $\in \mathcal{R}^{N \times 1}$ as follows:

$$
\begin{aligned}
x'(t) &= Ax(t) + Bu(t) \\
y(t) &= Cx(t) + Du(t)
\end{aligned}
\tag{1}
$$

where x is a state vector, u is the input vector, and y is the output vector. X-prime (x') denotes the derivative of the state vector x. The discrete form of SSM uses a time-scale parameter $\Delta$ to transform continuous parameters A, B, and C to discrete parameters $\overline{A}, \overline{B}$ and $\overline{C}$ using fixed formula $\overline{A} = f_A(\Delta, A), \overline{B} = f_B(\Delta, A, B)$. The pair $f_A, f_B$ is the discretization rule that uses a zero-order hold (ZOH) for this transformation. The equations are as follows:

$$
\begin{aligned}
x_k &= \overline{A}x_{k-1} + \overline{B}u_k & \overline{A} &= (I - \Delta/2 \cdot A)^{-1}(I + \Delta/2 \cdot A) \\
y_k &= \overline{C}x_k & \overline{B} &= (I - \Delta/2 \cdot A)^{-1}\Delta B & \overline{C} &= C.
\end{aligned}
\tag{2}
$$

The spectral SSM 435 of the GSSSM 411 is an SSM that performs spectral transformations of one or more of its inputs or learning parameters. Further, in some implementations, the parameters of the spectral SSM 435 of the described technology are more efficiently trained than the parameters (e.g., matrix A, matrix B, matrix C) in conventional SSMs performed using Equation (2). For example, the discretized form of recurrent SSM in Equation (2) is not practically trainable due to its sequential nature. Accordingly, the described technology provides training for the spectral SSM 435 that is more efficient and less prone to instability compared to training of conventional SSMs. In some implementations, instead of a complex training of matrices A, B, and C, the training of the spectral SSM 435 involves training a kernel parameter.

For example, to simplify training, continuous convolution as discrete convolution, a linear time-invariant system, to get an efficient representation. For simplicity, let the initial state be $x_{-1} = 0$, this recurrence in Equation (2) can be explicitly unrolled as:

$$
x_0 = \overline{B}u_0 \, x_1 = \overline{AB}u_0 + \overline{B}u_1 \, x_2 = \overline{A}^2\overline{B}u_0 + \overline{AB}u_1 + \overline{B}u_2 \ldots
\tag{3}
$$

$$
y_0 = \overline{CB}u_0 \, y_1 = \overline{CAB}u_0 + \overline{CB}u_1 \, y_2 = \overline{CA}^2\overline{B}u_0 + \overline{CAB}u_1 + \overline{CB}u_2
\tag{4}
$$

Equation (3) can be vectorized into a convolution with an explicit formula for the convolution kernel given by:

$$
\begin{aligned}
y_k &= \overline{CA}^k\overline{B}u_0 + \overline{CA}^{k-1}\overline{B}u_1 + \cdots + \overline{CAB}u_{k-1} + \overline{CB}u_k = \sum_{j=0}^k \overline{CA}^j\overline{B} \cdot u_{k-j} \\
y &= \overline{K} * u = (\overline{CB}, \overline{CAB}, \ldots, \overline{CA}^{L-1}\overline{B}) * u
\end{aligned}
\tag{5}
$$

The kernel $\overline{K}$ in Equation (5) can be represented as a single (non-circular) convolution which can be computed very efficiently with FFTs. However, computing K in (5) is non-trivial and is modeled as a K the SSM convolution kernel or filter.

The kernel $\overline{K} \in \mathbb{R}^L$ for the spectral SSM 435 using scalars $\overline{CA}^k\overline{B}$ can be represented as:

$$
\overline{K} = (\overline{CB}, \overline{CAB}, \ldots, \overline{CA}^{L-1}\overline{B}) = (Ce^{A \cdot k\Delta}(e^{A\Delta} - I)A^{-1}B)_{0 \le k < L},
\tag{6}
$$

which can be simplified to:

$$y_k = \sum_{j=0}^{L} \overline{K}_j \cdot u_{L-j} \qquad (7)$$

where $\overline{K}_j$ denotes the value of the kernel at position $j$.

Given an input sequence $u \in \mathbb{R}^L$ and the SSM kernel $\overline{K} \in \mathbb{R}^L$, it is possible to compute the output $y \in \mathbb{R}^L$ sequentially using the recurrence from Equation (7). However, this sequential computation requires $O(L^2)$ multiplications, which may result in slow training with long inputs, despite being desirable for autoregressive decoding. In some implementations, instead, all elements of y are computed in parallel using Equation (7), assuming $\overline{K}$ has already been computed.

The challenge lies in computing $\overline{K}$, as this involves calculating $L$ distinct matrix powers using Equation (6). In some implementations, a diagonal state spaces assumption simplifies this calculation by assuming the state matrix $A$ is diagonal and $B = (1)_{1 \leq i \leq N}$, without losing performance. This assumption allows for the straightforward computation of $\overline{K}$.

The diagonal matrix $A$ is computed as $-\exp(\Lambda_{re}) + i \cdot \Lambda_{im}$, where $i = \sqrt{-1}$. With this parameterization, the kernel (Equation 6) can be computed as a matrix-vector product, as follows:

$$\overline{K} = \left( C * \left( (e^{\lambda_i \Delta} - 1)/\lambda_i \right)_{1 \leq i \leq N} \right)_{1 \times N} \cdot \text{elementwise} - \exp(P_{N \times L}) \qquad (8)$$

where $P_{i,k} = \lambda_i k \Delta$ and * denotes elementwise multiplication. The kernel K in Equation (8) is computed using $\Lambda_{re}$, $\Lambda_{im}$, $\Delta$ and C. Training involves parameterizing both the real and imaginary parts of A in log space.

The GSSSM 411 receives an output of a layer normalizer 421. The output of the layer normalizer 421 are N normalized embedded image patches of an input image. For example, an image embedder generates an encoded image including N embedded image patches from N patches of an input image. The layer normalizer 421 normalizes each of the N embedded image patches to generate the N normalized embedded image patches, which are input to the GSSSM 411. In the left branch of the flow 400, the N embedded image patches are input to the linear layer 431. Linear layers connect every input neuron to every output neuron and are commonly used in neural networks. A typical linear layer is part of a feedforward neural network that includes the linear layer and an activation function. Three parameters define a fully connected layer: batch size, number of inputs, and number of outputs. Forward propagation, activation gradient computation, and weight gradient computation are directly expressed as matrix-matrix multiplications. The sigmoid activation function (S) 433 is applied to the output of the linear layer 431. In some implementations, other activation functions may be used instead of the sigmoid activation function.

In the right branch of the flow 400, the N embedded image patches are input to the linear layer 432. The sigmoid activation function (S) 434 is applied to the output of the linear layer 432. In some implementations, other activation functions may be used instead of the sigmoid activation function. The output of the S 433 is input to the spectral SSM 435. The output of the spectral SSM 435 on the left branch of the flow 400 and the output of the S 434 on the right branch of the flow 400 are combined at the multiplier (X) 436. The output of the spectral SSM 435 is a patch spectral SSM feature determined for a normalized embedded image patch of the set of N normalized embedded image patches. The X 436 multiplies (e.g., using an element-wise multiplication) the output of the spectral SSM 435 with the output of the S 434.

The output of the X 436 (e.g., the product of the output of the spectral SSM 435 and the output of the S 434) is input to the linear layer 439. The output of the linear layer 439, which is the output of the GSSSM 411, is combined with the output of the layer normalizer 421 at the summer 423. The output of the summer 423 is input to further layers (e.g., a layer normalizer and an FFN) of an image encoder to generate an encoded image.

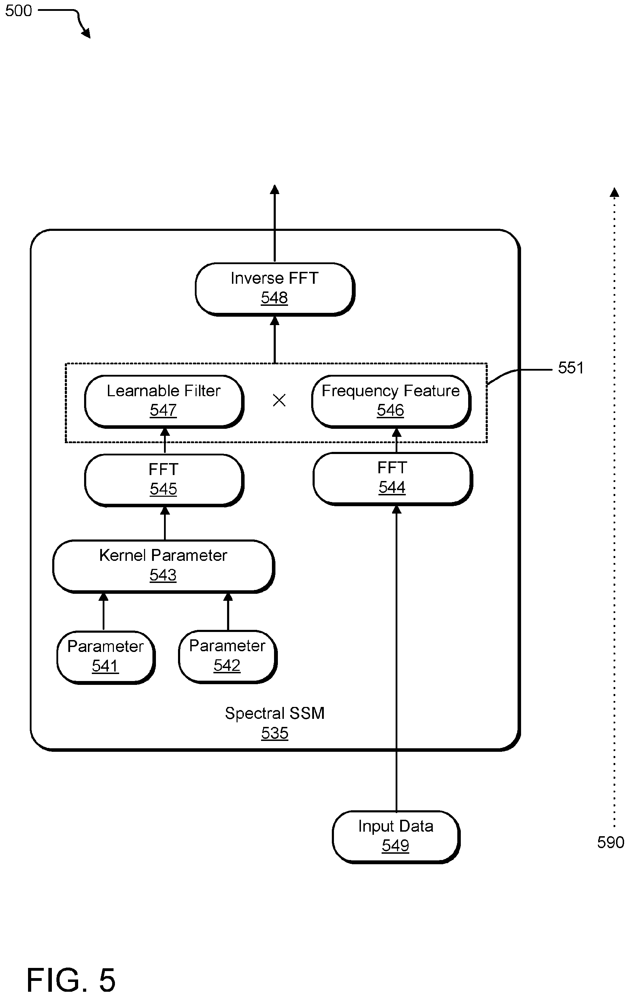

FIG. 5 illustrates an example flow 500 of a spectral SSM 535 within an GSSSM of an image encoder. The flow 500 in FIG. 5 progresses from bottom to top, as indicated by the dashed arrow 590.

Training involves initializing parameter 541 and parameter 542 as two samples from respective Gaussian distributions having means $\mu_1$ and $\mu_2$ and covariances $\Sigma_1$ and $\Sigma_2$, respectively for learnable weight and input. The functional forms of these Gaussians (e.g., parameter 541 and parameter 542) are:

$$G_1(x) = \exp\left(-\frac{1}{2}(x - \mu_1)^T \Sigma_1^{-1}(x - \mu_1)\right), G_2(x) = \exp\left(-\frac{1}{2}(x - \mu_2)^T \Sigma_2^{-1}(x - \mu_2)\right) \qquad (9)$$

where $G_1$ represents parameter 541 and $G_2$ represents parameter 542. When the two Gaussian parameters (e.g., parameter 541 and parameter 542) are multiplied, the resulting function is also Gaussian with a new mean and a new covariance. The product of the two Gaussian parameters (e.g., parameter 541 and parameter 542) is given by:

$$G_{\text{out}}(x) = G_1(x) \cdot G_2(x) = \exp\left(-\frac{1}{2}(x - \mu_{\text{out}})^T \Sigma_{\text{out}}^{-1}(x - \mu_{\text{out}})\right) \qquad (10)$$

where the parameters $\mu_{\text{out}}$ and $\Sigma_{\text{out}}$ are defined as follows: $\Sigma_{\text{out}}^{-1} = \Sigma_1^{-1} + \Sigma_2^{-1}, \mu_{\text{out}} = \Sigma_{\text{out}}(\Sigma_1^{-1}\mu_1 + \Sigma_2^{-1}\mu_2)$.

The element $\left(\frac{e^{\lambda_i \Delta} - 1}{\lambda_i}\right)$ may be removed from the SSM kernel in Equation (8) and approximated with a simplified linear learnable weight, initialized with random samples from a Gaussian distribution. Similarly, the output matrix C may be approximated as a simplified linear learnable weight, also initialized with random samples from a Gaussian distribution.

The final kernel parameter 543, is the element-wise product of the $\left(\frac{e^{\lambda_i \Delta} - 1}{\lambda_i}\right)$ term and the C term, which are parameterized by $\psi_{\text{re}}$ and $\psi_{\text{im}} \in \mathbb{R}^N$. Accordingly, K = $\psi_{\text{re}} + j\psi_{\text{im}}$, where K is the kernel parameter 543 calculated from the parameter 541 ($\psi_{\text{re}}$) and the parameter 542 ($\psi_{\text{im}}$). The calculation of the kernel parameter 543 from initial parameters (e.g., parameter 541 and parameter 542) in some implementations of the described technology simplifies the training process over the complex training process of conventional Mamba frameworks which require the calculation of A, B, and C matrices. Further, the simplified calculation of the kernel parameter 543 decreases training instability over the conventional Mamba frameworks.

The example spectral SSM 535 of the GSSSM performs spectral transformations (e.g., fast Fourier transforms (FFTs), Hartley transforms, or other spectral transformations) of input data 549 and of the kernel parameter 543 that is derived from a parameter 541 and a parameter 542. [The input data 549 to the spectral SSM 535 is the output of a sigmoid activation function of the GSSSM. For example, the input data 549 includes N input data vectors, and each of the N input data vectors corresponds to N normalized embedded input image patches to which a linear layer and then a sigmoid activation function of the GSSSM have been applied. The spectral SSM 535 is applied to each of the N input data vectors. \

The spectral transformations result in a learnable filter 547 and a frequency feature 546. For example, the FFT 545 of the kernel parameter 543 yields a learnable filter 547, and the FFT 544 of the input data 549 (e.g., corresponding to a patch of the input image) yields the frequency feature 546. In some implementations, the frequency feature 546 captures features of a patch of the input image that is represented in the input data 549. For example, the input data 549 is a normalized embedded image patch of a set of N embedded image patches. For example, the FFT 544 layer begins a transform component (e.g., a Fourier transform), enabling the FFT 544 to represent features of the input data 549 using real frequency components as a feature representation.

The spectral SSM 535 performs an inverse spectral transformation (e.g., an inverse Fourier transform, an inverse Hartley transform, or other inverse spectral transformation) of a product 551 (e.g., multiplication is represented as × in FIG. 5) of the learnable filter 547 and the frequency feature 546 to generate an output of the spectral SSM 535. For example, the inverse FFT 548 of the product 551 of the learnable filter 547 and the frequency feature 546. The output of the spectral SSM 535 is a patch spectral SSM feature corresponding to the patch of the input image represented in the input data 549. Applied to input data 549 for each patch of the input image, the SSM 535 generates a spectral SSM feature including a set of patch spectral SSM features, each patch spectral SSM feature of the set of patch spectral SSM features corresponding to a respective patch of the input image.

The gating mechanism in the spectral SSM 535 enables processing of input data 549 with fewer dimensions. For example, state spaces enhance the ability of the spectral SSM 535 to maintain and update context over time. The spectral SSM 535 maintains an evolving internal state, which helps it understand temporal dependencies and patterns in the input data 549 more effectively while keeping the complexity efficient at O(L log L). The spectral SSM 535 may be represented using the following equations:

$$U_{\text{input}} = \phi(XW_u + b_u) \in \mathbb{R}^{L \times H} \qquad V_{\text{input}} = \phi(XW_v + b_v) \in \mathbb{R}^{L \times M} \quad (11)$$

$$Y = MSS(U_{\text{input}}) \in \mathbb{R}^{L \times H} \qquad (12)$$

$$U_{\text{output}} = (YW_y + b_y) \ \in \ \mathbb{R}^{L \times M} \qquad\qquad (13)$$

$$O = (U_{\text{output}} \odot V_{\text{input}})W_o \ \in \ \mathbb{R}^{L \times D} \qquad\qquad (14)$$

where $X \in \mathbb{R}^{L \times D}$ represents the sequence of tokens, where $L$ is the sequence length (e.g., the number N of patches), $D$ is the model dimension, and $MSS$ represents the Spectral SSM 535. Here, $H$ and M denote expanded intermediate dimensions, and $\phi$ is an activation function. Examples of activation functions that may be used include a rectified linear unit (ReLU), a Gaussian error linear unit (GeLU), and a sigmoid linear unit (SiLU). A nonlinear activation function is a mathematical function used in artificial neural networks. It calculates the output of a node based on its individual inputs and their weights. Unlike linear activation functions, which produce a linear relationship between input and output, nonlinear activation functions introduce complexity and flexibility by producing a nonlinear relationship.

In Equation (11), an input is linearly projected twice (e.g., separate linear layers in the gated architecture of GSSSM resulting in U and V). In Equation (12), a spectral SSM 535 (represented in Equation 12 as MSS) is applied to the first linear projection U. Equation (13) represents another linear layer of the GSSSM and Equation (14) represents a multiplication step, where O is the output (e.g., the product) of the multiplication step (e.g., using a multiplier of the spectral SSM 535).

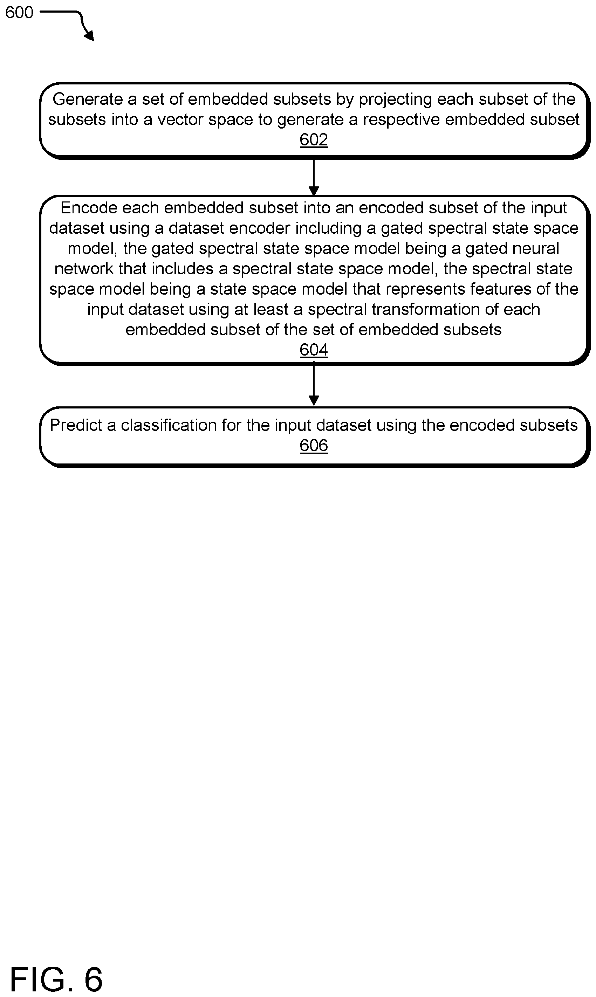

FIG. 6 illustrates example operations 600 for encoding an embedded image using an image encoder including a gated spectral state space model and classifying the encoded image. The example operations 600 include an example generating operation 602, an example encoding operation 604, and an example predicting operation 606.

The example projecting operation 602 generates a set of embedded subsets by projecting each subset of the subsets into a vector space to generate a respective embedded subset. For example, generating embedded subsets (e.g., embedded patches) of a dataset (e.g., an input image) can include generating a set of embedded patches by projecting each patch of a set of patches of an input image into a vector space. For example, the set of embedded patches includes an embedded patch for each patch of the input image. In some implementations, each portion of the portions of the input image encompasses an area (e.g., a square area) of the input image corresponding to one or more pixels of the input image. For example, the square area may be a single pixel, a two-pixel by two-pixel area, a six-pixel by six-pixel area, a sixteen-pixel by sixteen-pixel area, or other areas of the input image.

The example encoding operation 604 encodes each embedded subset into an encoded subset of the input dataset using a dataset encoder including a gated spectral state space model, the gated spectral state space model being a gated neural network that includes a spectral state space model. For example, encoding the embedded subsets (e.g., encoding the embedded image patches) into an encoded dataset (e.g., an encoded image) using a dataset encoder (e.g., an image encoder) that includes a GSSSM. Encoding the input dataset includes applying the dataset encoder to each embedded subset to generate a respective encoded subset. The spectral state space model is a state space model that represents the features of the input dataset (e.g., the input image) using at least a spectral transformation of each embedded subset (e.g., embedded patch). In some implementations, the spectral state space model represents the features of the input dataset by multiplying the spectral transformation of each embedded subset by a spectral transformation of a kernel parameter to determine a respective product and performing an inverse spectral transformation of each product to determine a respective subset feature (e.g., a patch feature for a patch of the set of patches). For example, the inverse spectral transformation (e.g., inverse FFT, inverse Hartley transform) is an inverse of a type of the spectral transformation (e.g., FFT, Hartley transform).

In some implementations, a state transition matrix (A), an input matrix (B), and an output matrix (C) of the spectral SSM are trained to generate the spectral state space model. In some implementations, the state transition matrix (A) is assumed to be a diagonal matrix to simplify the training process. In some implementations, a kernel parameter of the spectral state space model is trained to generate the spectral state space model. In some implementations, the kernel parameter is determined using a first initial parameter selected from a first Gaussian distribution and a second initial parameter selected from a second Gaussian distribution.

The example applying operation 606 predicts a classification for the input dataset using the encoded subsets. In some implementations, predicting the classification involves applying a classification model to the encoded dataset. For example, an image classification model is applied to the encoded image to generate the classification.

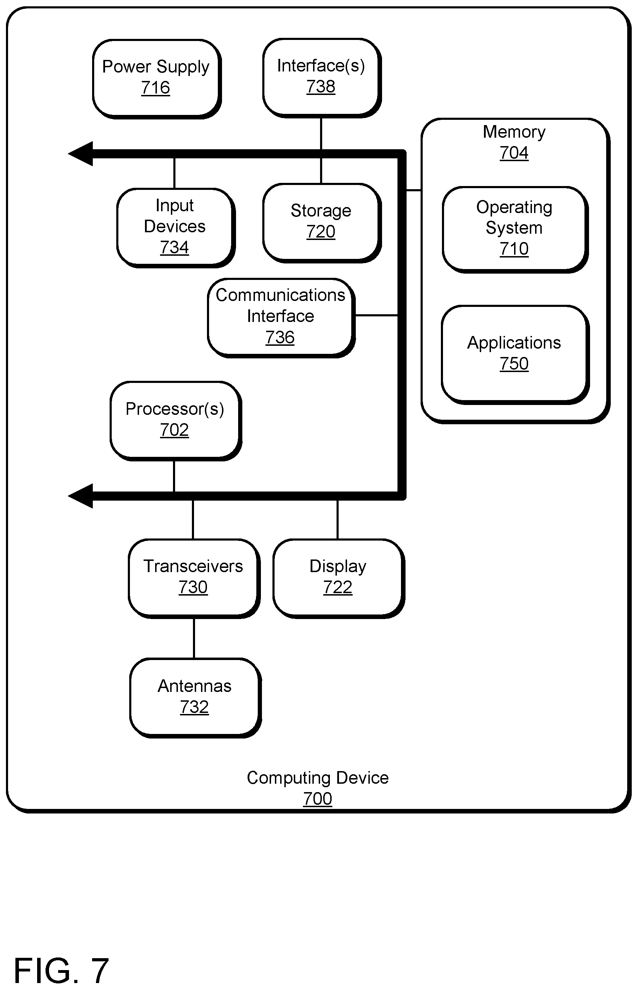

FIG. 7 illustrates an example computing device 700 for use in implementing the described technology. The computing device 700 may be a client computing device (such as a laptop computer, a desktop computer, or a tablet computer), a server/cloud computing device, an Internet-of-Things (IoT), any other type of computing device, or a combination of these options. The computing device 700 includes one or more hardware processor(s) 702 and a memory 704. The memory 704 generally includes both volatile memory (e.g., RAM) and nonvolatile memory (e.g., flash memory), although one or the other type of memory may be omitted. An operating system 710 resides in the memory 704 and is executed by the processor(s) 702. In some implementations, the computing device 700 includes and/or is communicatively coupled to storage 720.

In the example computing device 700, as shown in FIG. 7, one or more software modules, segments, and/or processors, such as applications 750, a transformer, linear projection layers, position embedders, spectral layers, spectral processors, attention layers, attention processors, attention layers, attention networks, processing modules, classifier heads, layer normalizers, multi-layer perceptrons, multi-head self-attention layers, convolutional operators, spectral gating networks, embedding processors, output interfaces, an image embedder, an image encoder, an image classifier, a nonlinear activation function, and other program code and modules are loaded into the operating system 710 on the memory 704 and/or the storage 720 and executed by the processor(s) 702. The storage 720 may store an input dataset (e.g., an input image including a set of patches), a dataset of identified features (e.g., including a classification determined for an input image), embedding spaces, weights, parameters (e.g., matrices, initial parameters sampled from Gaussian distributions, a kernel parameter, or other parameters), functions for determining parameters, and other data and be local to the computing device 700 or may be remote and communicatively connected to the computing device 700. In particular, in one implementation, components of a system for classifying a dataset may be implemented entirely in hardware or in a combination of hardware circuitry and software.

The computing device 700 includes a power supply 716, which may include or be connected to one or more batteries or other power sources, and which provides power to other components of the computing device 700. The power supply 716 may also be connected to an external power source that overrides or recharges the built-in batteries or other power sources.

The computing device 700 may include one or more communication transceivers 730, which may be connected to one or more antenna(s) 732 to provide network connectivity (e.g., mobile phone network, Wi-Fi®, Bluetooth®) to one or more other servers, client devices, IoT devices, and other computing and communications devices. The computing device 700 may further include a communications interface 736 (such as a network adapter or an I/O port, which are types of communication devices). The computing device 700 may use the adapter and any other types of communication devices for establishing connections over a wide-area network (WAN) or local-area network (LAN). It should be appreciated that the network connections shown are exemplary and that other communications devices and means for establishing a communications link between the computing device 700 and other devices may be used.

The computing device 700 may include one or more input devices 734 such that a user may enter commands and information (e.g., a keyboard, trackpad, or mouse). These and other input devices may be coupled to the server by one or more interfaces 738, such as a serial port interface, parallel port, or universal serial bus (USB). The computing device 700 may further include a display 722, such as a touchscreen display.

The computing device 700 may include a variety of tangible processor-readable storage media and intangible processor-readable communication signals. Tangible processor-readable storage can be embodied by any available media that can be accessed by the computing device 700 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 700. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Clause 1. A method for classifying an input dataset, the input dataset being divisible into subsets of the dataset, the method comprising: generating embedded subsets by projecting each subset of the subsets into a vector space to generate a corresponding embedded subset; encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and predicting a classification for the input dataset using the encoded image.

Clause 2. The method of clause 1, wherein a state transition matrix (A), an input matrix (B), and an output matrix (C) of the spectral state space model are trained to generate the spectral state space model, wherein the state transition matrix (A) is a diagonal matrix.

Clause 3. The method of clause 1, wherein a kernel parameter of the spectral state space model is trained to generate the spectral state space model.

Clause 4. The method of clause 3, wherein the kernel parameter is determined using a first initial parameter selected from a first Gaussian distribution and a second initial parameter selected from a second Gaussian distribution.

Clause 5. The method of clause 1, the spectral state space model further representing the features of the input dataset by multiplying the spectral transformation of each embedded subset by a spectral transformation of a kernel parameter to determine a respective product.

Clause 6. The method of clause 5, the spectral state space model further representing the features of the input dataset using a spectral state space model feature including a set of subset features, wherein determining the spectral state space model feature includes performing an inverse spectral transformation of the product to determine a respective subset feature of the set of subset features, the inverse spectral transformation being an inverse of a type of the spectral transformation.

Clause 7. The method of clause 1, wherein the input dataset includes an image and the subsets include patches of the image.

Clause 8. A computing system for classifying an input dataset, the input dataset being divisible into subsets of the dataset, the computing system comprising: one or more hardware processors; an image embedder processor executable by the one or more hardware processors and configured to generate embedded subsets by projecting each subset of the subsets into a vector space to generate a corresponding embedded subset; an image encoder processor executable by the one or more hardware processors and configured to encode the embedded subsets into an encoded dataset using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and an image classifier processor executable by the one or more hardware processors and configured to predict a classification for the input dataset using the encoded image.

Clause 9. The computing system of clause 8, wherein a state transition matrix (A), an input matrix (B), and an output matrix (C) of the spectral state space model are trained to generate the spectral state space model, wherein the state transition matrix (A) is a diagonal matrix.

Clause 10. The computing system of clause 8, wherein a kernel parameter of the spectral state space model is trained to generate the spectral state space model.

Clause 11. The computing system of clause 10, wherein the kernel parameter is determined using a first initial parameter selected from a first Gaussian distribution and a second initial parameter selected from a second Gaussian distribution.

Clause 12. The computing system of clause 10, the image encoder processor further configured to represent, using the spectral space state model, the features of the input dataset by multiplying the spectral transformation of each embedded subset by a spectral transformation of a kernel parameter to determine a respective product.

Clause 13. The computing system of clause 12, the image encoder processor further configured to represent, using the spectral space state model, the features of the input dataset using a spectral state space model feature including a set of subset features, wherein determining the spectral state space model feature includes performing an inverse spectral transformation of the product to determine a respective subset feature of the set of subset features, the inverse spectral transformation being an inverse of a type of the spectral transformation.

Clause 14. The computing system of clause 8, wherein the input dataset includes an image and the subsets include patches of the image.

Clause 15. One or more tangible processor-readable storage media embodied with instructions for executing on one or more processors and circuits of a computing device a process for classifying an input dataset, the input dataset being divisible into subsets of the dataset, the process comprising: generating embedded subsets by projecting each subset of the subsets into a vector space to generate a corresponding embedded subset; encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and predicting a classification for the input dataset using the encoded image.

Clause 16. The one or more tangible processor-readable storage media of clause 15, wherein a state transition matrix (A), an input matrix (B), and an output matrix (C) of the spectral state space model are trained to generate the spectral state space model, wherein the state transition matrix (A) is a diagonal matrix.

Clause 17. The one or more tangible processor-readable storage media of clause 15, wherein a kernel parameter of the spectral state space model is trained to generate the spectral state space model.

Clause 18. The one or more tangible processor-readable storage media of clause 17, wherein the kernel parameter is determined using a first initial parameter selected from a first Gaussian distribution and a second initial parameter selected from a second Gaussian distribution.

Clause 19. The one or more tangible processor-readable storage media of clause 15, the process further comprising representing, using the spectral state space model, the features of the input dataset by multiplying the spectral transformation of each embedded subset by a spectral transformation of a kernel parameter to determine a respective product.

Clause 20. The one or more tangible processor-readable storage media of clause 19, the process further comprising representing, using the spectral state space model, the features of the input dataset using a spectral state space model feature including a set of subset features, wherein determining the spectral state space model feature includes performing an inverse spectral transformation of the product to determine a respective subset feature of the set of subset features, the inverse spectral transformation being an inverse of a type of the spectral transformation.

Clause 21. A system for classifying an input dataset, the input dataset being divisible into subsets of the dataset, the system comprising: means for generating embedded subsets by projecting each subset of the subsets into a vector space to generate a corresponding embedded subset; means for encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and means for predicting a classification for the input dataset using the encoded image.

Clause 22. The system of clause 21, wherein a state transition matrix (A), an input matrix (B), and an output matrix (C) of the spectral state space model are trained to generate the spectral state space model, wherein the state transition matrix (A) is a diagonal matrix.

Clause 23. The system of clause 21, wherein a kernel parameter of the spectral state space model is trained to generate the spectral state space model.

Clause 24. The system of clause 23, wherein the kernel parameter is determined using a first initial parameter selected from a first Gaussian distribution and a second initial parameter selected from a second Gaussian distribution.

Clause 25. The system of clause 21, the spectral state space model further representing the features of the input dataset by multiplying the spectral transformation of each embedded subset by a spectral transformation of a kernel parameter to determine a respective product.

Clause 26. The system of clause 25, the spectral state space model further representing the features of the input dataset using a spectral state space model feature including a set of subset features, wherein means for determining the spectral state space model feature includes means for performing an inverse spectral transformation of the product to determine a respective subset feature of the set of subset features, the inverse spectral transformation being an inverse of a type of the spectral transformation.

Clause 27. The system of clause 21, wherein the input dataset includes an image and the subsets include patches of the image.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

**Claims**

1. A method for classifying an input dataset, the input dataset being divisible into subsets of the dataset, the method comprising:

    generating embedded subsets by projecting each subset of the subsets into a vector space to generate a corresponding embedded subset;
    encoding the embedded subsets into an encoded image using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and
    predicting a classification for the input dataset using the encoded image.

2. The method of claim 1, wherein a state transition matrix (A), an input matrix (B), and an output matrix (C) of the spectral state space model are trained to generate the spectral state space model, wherein the state transition matrix (A) is a diagonal matrix.

3. The method of claim 1 or 2, wherein a kernel parameter of the spectral state space model is trained to generate the spectral state space model.

4. The method of claim 3, wherein the kernel parameter is determined using a first initial parameter selected from a first Gaussian distribution and a second initial parameter selected from a second Gaussian distribution.

5. The method of one of claims 1 to 4, the spectral state space model further representing the features of the input dataset by multiplying the spectral transformation of each embedded subset by a spectral transformation of a kernel parameter to determine a respective product.

6. The method of claim 5, the spectral state space model further representing the features of the input dataset using a spectral state space model feature including a set of subset features, wherein determining the spectral state space model feature includes performing an inverse spectral transformation of the product to determine a respective subset feature of the set of subset features, the inverse spectral transformation being an inverse of a type of the spectral transformation.

7. The method of one of claims 1 to 6, wherein the input dataset includes an image and the subsets include patches of the image.

8. A computing system for classifying an input dataset, the input dataset being divisible into subsets of the dataset, the computing system comprising:

    one or more hardware processors;
    an image embedder processor executable by the one or more hardware processors and configured to generate embedded subsets by projecting each subset of the subsets into a vector space to generate a corresponding embedded subset;
    an image encoder processor executable by the one or more hardware processors and configured to encode the embedded subsets into an encoded dataset using a dataset encoder including a gated spectral state space model, the gated spectral state space model being a gated neural network that includes a spectral state space model, the spectral state space model being a state space model that represents features of the input dataset using at least a spectral transformation of each embedded subset of the embedded subsets; and
    an image classifier processor executable by the one or more hardware processors and configured to predict a classification for the input dataset using the encoded image.

9. The computing system of claim 8, wherein a state transition matrix (A), an input matrix (B), and an output matrix (C) of the spectral state space model are trained to generate the spectral state space model, wherein the state transition matrix (A) is a diagonal matrix.

10. The computing system of claim 8 or 9, wherein a kernel parameter of the spectral state space model is trained to generate the spectral state space model.

11. The computing system of claim 10, wherein the kernel parameter is determined using a first initial parameter selected from a first Gaussian distribution and a second initial parameter selected from a second Gaussian distribution.

12. The computing system of claim 10 or 11, the image encoder processor further configured to represent, using the spectral space state model, the features of the input dataset by multiplying the spectral transformation of each embedded subset by a spectral transformation of a kernel parameter to determine a respective product.

13. The computing system of claim 12, the image encoder processor further configured to represent, using the spectral space state model, the features of the input dataset using a spectral state space model feature including a set of subset features, wherein determining the spectral state space model feature includes performing an inverse spectral transformation of the product to determine a respective subset feature of the set of subset features, the inverse spectral transformation being an inverse of a type of the spectral transformation.

14. The computing system of one of claims 8 to 13, wherein the input dataset includes an image and the subsets include patches of the image.

15. One or more tangible processor-readable storage media embodied with instructions for executing on one or more processors and circuits of a computing device, the method of one of claims 1 to 7.

100

Input image 101

Patch 103

Image Embedder
105

Embedded Image
107

Image Encoder
109

Spectral Gated State
Space Model
(SGSSM)
111

Encoded Image
113

Image Classifier
115

Classification
117
(e.g., "Frog")

FIG. 1

FIG. 2

300

Encoded Image
313

Image Encoder
309

N ×

329

Feed Forward Network (FFN)
327

Layer Normalizer
325

323

SGSSM
311

Layer Normalizer
321

Embedded Image
307
(e.g., N patch
embeddings)

370

FIG. 3

400

SGSSM
411

Linear Layer
439

X
436

Spectral SSM
435

S
433

S
434

Linear Layer
431

Linear Layer
432

Layer Normalizer
421

423

480

FIG. 4

500

Inverse FFT
548

551

Learnable Filter
547

×

Frequency Feature
546

FFT
545

FFT
544

Kernel Parameter
543

Parameter
541

Parameter
542

Spectral SSM
535

Input Data
549

590

FIG. 5

600

Generate a set of embedded subsets by projecting each subset of the subsets into a vector space to generate a respective embedded subset
602

Encode each embedded subset into an encoded subset of the input dataset using a dataset encoder including a gated spectral state space model, the gated spectral state space model being a gated neural network that includes a spectral state space model, the spectral state space model being a state space model that represents features of the input dataset using at least a spectral transformation of each embedded subset of the set of embedded subsets
604

Predict a classification for the input dataset using the encoded subsets
606

FIG. 6

FIG. 7

# EUROPEAN SEARCH REPORT

**Application Number**

EP 25 19 0952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhu Lianghui ET AL: "Vision Mamba: Efficient Visual Representation Learning with Bidirectional State Space Model", arXiv.org, 10 February 2024 (2024-02-10), XP093315529, Retrieved from the Internet: URL:https://arxiv.org/pdf/2401.09417v2 [retrieved on 2025-09-16] * figures 1,2 * | 1-15 | INV. G06V10/82 |
| A | ALBERT GU ET AL: "Mamba: Linear-Time Sequence Modeling with Selective State Spaces", ARXIV.ORG, CORNELL UNIVERSITY LIBRARY, 201 OLIN LIBRARY CORNELL UNIVERSITY ITHACA, NY 14853, 31 May 2024 (2024-05-31), XP091773463, * 4.6.2 Selective SSM; page 16 * * page 3 * * page 36, paragraph first * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 18 September 2025 | Meier, Ueli |

EPO FORM 1503 03.82 (P04C01)